# EUROPEAN PATENT SPECIFICATION

(11) **EP 1 751 538 B1**
(45) Date of publication and mention of the grant of the patent: **18.11.2009**
(21) Application number: 04741632.6
(22) Date of filing: 22.05.2004
(51) Int. Cl.: G01N 30/60, B01L 3/00

(54) **PARALLEL PROCESSING MICROFLUID CHIP**
MIKROFLUIDCHIP ZUR PARALLELEN PROZESSIERUNG
PUCE MICROFLUIDE POUR TRAITEMENT PARALLÈLE

(43) Date of publication of application: 14.02.2007
(73) Proprietor: Agilent Technologies, Inc., Santa Clara, CA 95051 (US)
(72) Inventor: GLATZ, Bernd, Hewlett-Packard-Str. 8, 76337 Waldbronn (DE); ANDERER, Herbert, Hewlett-Packard-Str. 8, 76337 Waldbronn (DE); BÄUERLE, Martin, Hewlett-Packard-Str. 8, 76337 Waldbronn (DE); KRAICZEK, Karsten, Hewlett-Packard-Str. 8, 76337 Waldbronn (DE); EICKHOFF, Jan, Hewlett-Packard-Str. 8, 76337 Waldbronn (DE); MÜLLER, Patrick, Hewlett-Packard-Str. 8, 76337 Waldbronn (DE)
(74) Representative: Barth, Daniel Mathias
(86) International application number: PCT/EP2004/050893
(87) International publication number: WO 2005/114169

(56) References cited:
- EP-A- 1 162 464
- WO-A-2004/015411
- WO-A-2004/042383

## Description

### BACKGROUND ART

The present invention relates generally to microfluidic laboratory technology for chemical, physical, and/or biological analysis, separation, or synthesis of substances on a substrate with a microfluidic structure. It relates in particular to operating devices with microfluidic structure.

Within a typical cell, for example, there are several thousand proteins carrying out the metabolic work of a cell. A number of techniques have been suggested for analyzing these cellular proteins, such as two-dimensional electrophoresis or liquid chromatography followed by mass spectrometry. Usual laboratory assemblies using mass spectrometers, have a system inherent idle time up to 70 to 80%, for example caused by feeding and reconditioning the system. This results in a high total analysis time and in an unfavorable degree of utilization of the expensive laboratory equipment. Besides this, the mass spectrometer produces during the idle time non-useful data that has to be filtered out, deleted, or alike. Due to enormous amounts of samples and components to be analyzed, efforts in the field are made to reduce costs and analyzing time. One way to achieve this is to provide miniaturized systems. Such systems guarantee generally improved performance characteristics. Other approaches for optimizing the analyzing processes are to use switching-valves to feed the analyzing devices efficiently or to use arrays of analyzing devices as described, for example, in EP 1 162 464 A1, or WO 01/84143 A1.

### DISCLOSURE

It is an object of the invention to provide an improved and efficient operating of a microfluidic analyzing device. The object is solved by the independent claims. Preferred embodiments are shown by the dependent claims.

Analyzing processes, in particular the liquid chromatography process, comprise different steps, for example the steps of enrichment of the sample on a substrate, starting a gradient of solvent, eluting the sample and spraying it into a mass spectrometer, and reconditioning the substrate. Only during the step of eluting and spraying the sample into the mass spectrometer, relevant data is rendered. During the other steps, the mass spectrometer is normally idle or produces non-relevant data. Because of the time-shifted processes, at least one of the processes can always produce analyzable liquid to inject into a mass spectrometer to produce relevant data. The mass spectrometer can be operated more time-efficiently.

Embodiments may include one or more of the following. One of the analytical elements can be fed with a sample or can be reconditioned while the other one can produce analyzable liquid and/or data, and vice versa. The two analytical elements to be operated in parallel comprise for example at least one detection area, at least one spray tip, at least one reversed phase column, at least one combination column, and/or at least one enrichment column. Thus, two different processes can be executed on the microfluidic chip. Advantageously the microfluidic chip comprises two equal analytical elements. This makes it possible to execute two equal processes on the microfluidic chip in parallel. The processes need equal time for equal steps. They can therefore be executed on the microfluidic chip more time-efficiently through time shifting. Compared to chips with only one process up to 50 % analysis time can be saved. The degree of utilization of an expensive mass spectrometer used for the analysis can be optimized under best-case conditions nearly up to 100%.

In advantageous embodiments, the microfluidic chip comprises two or more spray tips. Each spray tip can be assigned to one process. This saves time needed to flush the spray tips and flow paths leading to the spray tips and reduces problems of soiled spray tips.

According to a preferred embodiment, the spray tips are moveable from a first to second position. The spray tips can be positioned relatively towards a mass spectrometer to inject relevant components of the samples into the mass spectrometer. Non-relevant, soiled or harmful liquid are not injected into the mass spectrometer. Such liquid is normally separated from the mass spectrometer by a valve leading the liquid into a waste container. With two or more spray tips this liquid can be directed to the waste container by the spray tip/s without using a valve. The spray tip/s currently not used for the analysis and consequently not positioned into the mass spectrometer can discard the unnecessary liquid.

According to embodiments, the microfluidic chip comprises at least one port, in particular an array of ports, which is adapted to interact with the multi-route switching valve, in particular for sealing and/or opening and/or connecting the port, in particular the array of ports, of the microfluidic chip. The different processes can be controlled, switched, and time-shifted by the valve.

The valve is adapted for sealing and/or opening and/or connecting the port, in particular the array of ports, of the microfluidic chip without any fittings or screws. The valve can seal the ports or rather the array of ports just by pressing it to the surface of the microfluidic chip.

Embodiments may also include one or more of the following. The different processes can be controlled, switched, and time-shifted by the multi-route switching valve. The multi-route switching valve may comprise one or a combination of more than one multi-port switching valves to make various operating conditions of the microfluidic chip possible.

Embodiments may also include one or more of the following. The microfluidic device can be operated and/or used advantageously by loading a first data stream from a laboratory apparatus and by loading a second data stream from the laboratory apparatus. The data streams are relevant data streams. A relevant data stream is for example an output, in particular an output file while running an analysis, comprising the peaks from a liquid currently analyzed within a mass spectrometer. The first data stream results from a liquid analyzed in a first process and the second data stream results from a liquid analyzed in a second process. Possibly more then two data streams are loaded from the laboratory apparatus. In further embodiments, the data streams are loaded to different data files and switching pulses are generated while opening and/or closing the data files. The switching pulses can be used to control multi-route switching valves and consequently to control the processes executed by the device. A movement of the multi-route valve can be triggered by the generated switching pulse for changing its setting, for example to switch from the analysis phase of the first process to the analysis phase of the second process. During the analysis phase of a process, relevant liquid is injected into the laboratory apparatus.

The invention can be partly or entirely embodied or supported by one or more suitable software programs, which can be stored on or otherwise provided by any kind of data carrier, and which might be executed in or by any suitable data processing unit. Software programs or routines are preferably applied for controlling or rather operating the microfluidic chip or rather the microfluidic device. Besides this, software programs or routines are preferably applied for synchronizing or time-shifting parallel processes executed on the microfluidic chip or rather the microfluidic device.

### BRIEF DESCRIPTION OF DRAWINGS

Other objects and many of the attendant advantages of embodiments of the present invention will be readily appreciated and become better understood by reference to the following more detailed description of preferred embodiments in connection with the accompanied drawing(s). Features that are substantially or functionally equal or similar will be referred to with the same reference sign(s).

Fig. 1 shows a hydraulic layout of a microfluidic device;

Fig. 2 shows a schematic layout of a microfluidic chip according to the hydraulic layout of the microfluidic device of Fig. 1;

Fig. 3 shows a timing diagram for the microfluidic chip of Fig. 2;

Fig. 4a to 4d show a hydraulic layout of another microfluidic device in four different settings;

Fig. 4e shows a schematic layout of another microfluidic chip according to the hydraulic layout of the microfluidic device of the Fig. 4a to 4 d;

Fig. 4f shows a timing diagram for the microfluidic chips of Fig. 4a to 4f;

Fig. 5A to 5D show a schematic layout of an other microfluidic chips in four different settings;

Fig. 6 shows a timing diagram for the microfluidic chips of Fig. 5A and 5D;

Fig. 7 shows a hydraulic layout of another microfluidic device;

Fig. 8 and 9 show two different schematic layouts of other microfluidic chips according to the hydraulic layout of the microfluidic device of Fig. 7;

Fig. 10 shows a schematic layout of another microfluidic chip with microfluidic structures, in particular flow paths and combination columns;

Fig. 11 shows a detailed view of the microfluidic chip as shown in Fig. 10 together with a multi-route switching valve in a first setting;

Fig. 12A, 12B, and 12C show different cross-sectional views of the device of Figure 10, taken along the lines A - A, B - B and C - C of Figure 10.

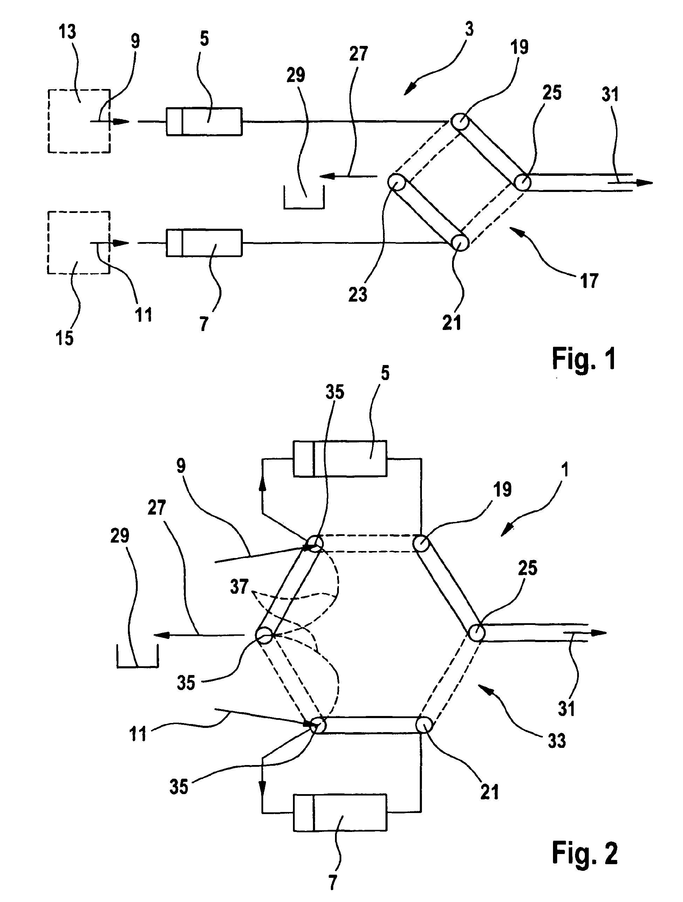

Fig. 2 shows a schematic layout of a microfluidic chip 1 according to a hydraulic layout of a microfluidic device 3 as shown in Fig. 1. The microfluidic chip 1 can comprise or consist of any material, preferred a flexible material, for example plastic or rather any polymeric material. In another preferred embodiment, the microfluidic chip 1 comprises polyimide.

The microfluidic device 3 as shown in Figure 1 comprises two analytical elements, a first combination column 5 and a second combination column 7. The combinations columns are adapted for enriching and for analyzing a sample. The combination columns 5 and 7 can be coupled at two inlet ports - symbolized by two arrows 9 and 11 - to two sample-feeding devices 13 and 15 drawn in dotted lines, for example two automatic samplers. The flow direction of the combination columns 5 and 7 is also symbolized by the arrows 9 and 11.

The combination columns 5 and 7 are downstream coupled to a multi-route switching device 17 adapted for coupling with and/or for sealing two switching ports 19 and 21 and two outlet ports 23 and 25 of the microfluidic device 3. An arrow 27 symbolizes that the outlet port 23 of the microfluidic device 3 can be coupled to a waste container 29. An arrow 31 symbolizes that the outlet port 25 of the microfluidic device 3 can be coupled to a laboratory apparatus (not illustrated), for example by a spray tip to a mass spectrometer.

The multi-route switching device 17 realizes two different settings in a first setting - symbolized with continuous lines - a first switching port 19 is connected to a second outlet port 25 and a second switching port 21 is connected to a first outlet port 23 of the microfluidic device 3.

In a second setting - symbolized with dotted lines - the second switching port 21 is connected to the second outlet port 25 and the first switching port 19 is connected to the first outlet port 23.

Consequently, in the first setting the first combination column 5 is coupled to the laboratory apparatus and the second combination column 7 is coupled to the waste container 29. In the second setting the flow and coupling is reversed accordingly.

Figure 2 shows the same hydraulic functionality as described in Figure 1 realized by the microfluidic chip 1. Therefore, only the differences are described.

The microfluidic chip 1 can interact with a six-port multi-route switching valve 33 - symbolized by dotted and continuous lines. Differing from the hydraulic layout as described in Figure 1 three ports 35 of the microfluidic chip 1 are functionally combined as one port by two bypass flow paths 37 - illustrated with dotted lines. The ports 35 and the two bypass flow paths 37 fulfill the functionality of the first outlet port 23 as shown in Fig. 1. The six-port multi-route switching valve 33 can be a standardized part. Therefore, it can be advantageous, to adapt the microfluidic chip 1 to the six-port multi-route switching valve 33.

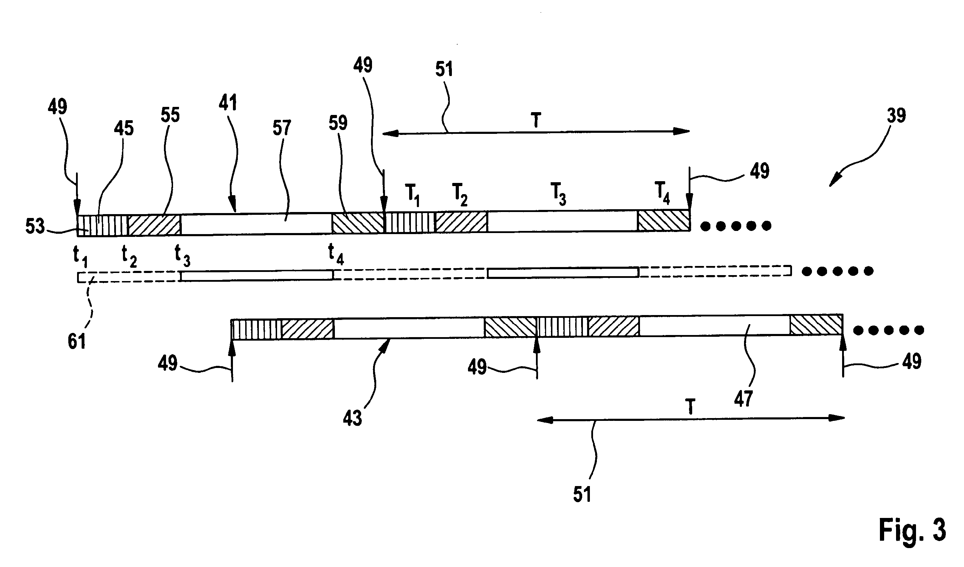

Fig. 3 shows a timing diagram 39 for the microfluidic chip 1 as described in Fig. 2.

Two horizontal bars 41 and 43 with different hatching symbolize different phases of two processes 45 and 47 executed in parallel on the microfluidic chip 1. The processes 45 and 47 are repeating processes. The starting points are each symbolized by arrows 49. The abscissa axis shows the process time. The time elapsed for one repetition of the processes 45 and 47 is equal in this embodiment and is symbolized by two double arrows 51 and the capital letter "T". Each process 45 and 47 comprises four different phases 53, 55, 57 and 59. The time span needed for the different phases 53, 55, 57, and 59 of the processes 45 and 47 are symbolized by the capital letters T1, T2, T3, and T4.

In an embodiment, the phases 53, 55, 57, and 59 are assigned as follows: A first phase 53 - vertical hatching - corresponds with the steps of enriching a sample on a substrate or rather of injecting a sample into the microfluidic chip 1 by one of the sample-feeding devices 13 or 15. A second phase 55 - inclined hatching - corresponds with the step of starting a gradient of solvent. A third phase 57 - without hatching - corresponds with the step of eluting the sample from the substrate and spraying it into a mass spectrometer. A fourth phase 59 - declined hatching - corresponds with the step of reconditioning the substrate.

In embodiments, the substrates are contained in the first combination column 5 - first process 45 - and in the second combination column 7 - second process 47.

The processes 45 and 47 are time-shifted by the six-port multi-route switching valve 33 of the microfluidic chip 1. A bar 61 symbolizes the different settings of the six-port multi-route switching valve 33 of the microfluidic device 3 with dotted and continuous sectors of the bar 61 according to the illustration of Figure 2. To operate the laboratory apparatus coupled to the microfluidic chip 1 as time-efficiently as possible it must always be fed with relevant liquid. Relevant liquid is only produced by the third phases 57 of the processes 45 and 47. Relevant liquid injected into a mass spectrometer causes for example significant peaks. To guarantee a continuous measurement of the laboratory apparatus in this embodiment, the sum of the time spans for the non-significant liquid producing phases 53, 55 and 59 of the processes 45 and 47 is equal to the time span of the third relevant liquid producing phases 57 of the processes 45 and 47 (T1 + T2 + T4 = T3).

The starting times of the four phases 53, 55, 57 and 59 of the first repetition of the process 45 are symbolized exemplarily by the small letters t1, t2, t3, and t4. The setting of the six-port multi-route switching valve 33 has to be changed at t3 and t4 and at equivalent points of time during the following repetitions of the processes 45 and 47.

The processes 45 and 47 are 50% time-shifted, equal, and executed in parallel on the microfluidic chip 1. In other preferred embodiments, the processes can be different in processing time and process type and time shifted with any other percentage.

The two processes 45 and 47 are executed mainly each by one analytical element, in this embodiment mainly by the first combination column 5 and the second combination column 7 of the microfluidic chip 1.

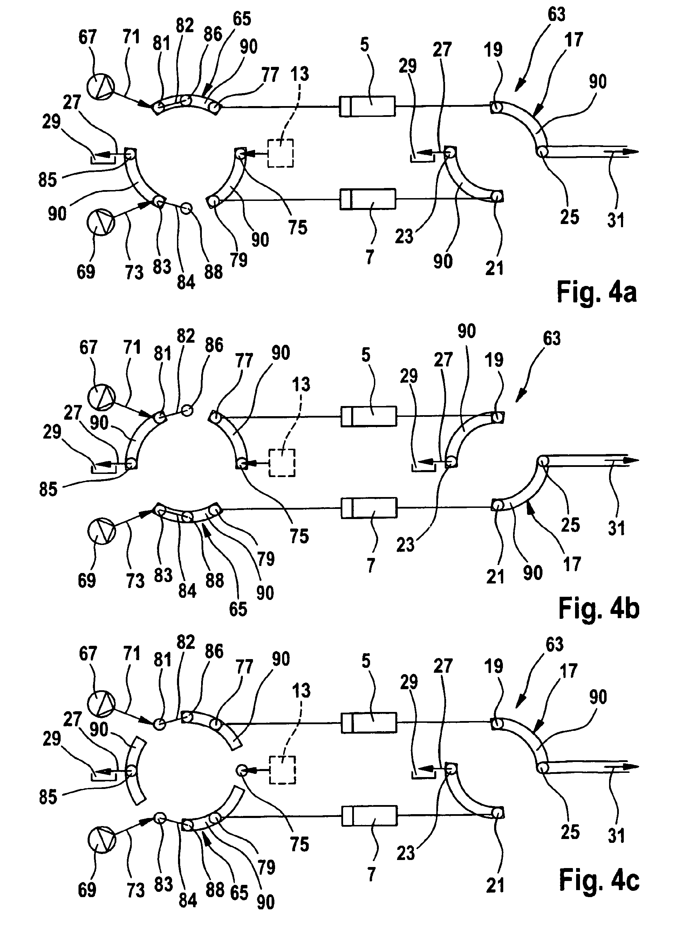

Fig. 4a to 4d show a hydraulic layout of a microfluidic device 63, for example a microfluidic chip.

Differing from the microfluidic device 3 as shown in Figure 1, the microfluidic device 63 comprises two multi-route switching devices, the multi-route switching device 17, which is adapted for coupling and/or sealing the four ports 19, 21, 23, and 25 of the microfluidic device 63, and a second multi-route switching device 65.

Differing from the microfluidic device 3 as shown in Figure 1, the microfluidic device 63 is adapted to be coupled with just one sample-feeding device 13 - symbolized by the arrow 9 - and to be coupled with two microfluidic feeding devices - symbolized by arrows 71 and 73 - in this embodiment with two nano-pumps 67 and 69. In embodiments, the sample-feeding device can comprise an injector needle and an additional nano pump or just the injector needle.

The second multi-route switching device 65 is adapted for coupling and/or sealing eight ports 75, 77, 79, 81, 83, 84, 85, and 86 of the microfluidic device 63:
- a sample inlet port 75 which can be coupled to the sample-feeding device 13;
- a first column port 77 which is coupled to the first combination column 5 and a second column port 79 which is coupled to the second combination column 7;
- a first inlet port 81 which is coupled to a first parallel flow path 82 within the microfluidic device 63;
- a second inlet port 83 which is coupled to a second parallel flow path 84 within the microfluidic device 63;
- a second outlet port 85 which can be also coupled to the waste container 29 - also symbolized with an arrow 27;
- a first parallel port 86 which is coupled to the other end of the first parallel flow path 82; and
- a second parallel port 88 which is coupled to the other end of the second parallel flow path 84.

The inlet ports 83 and 85 can be coupled to the nano-pumps 67 and 69.

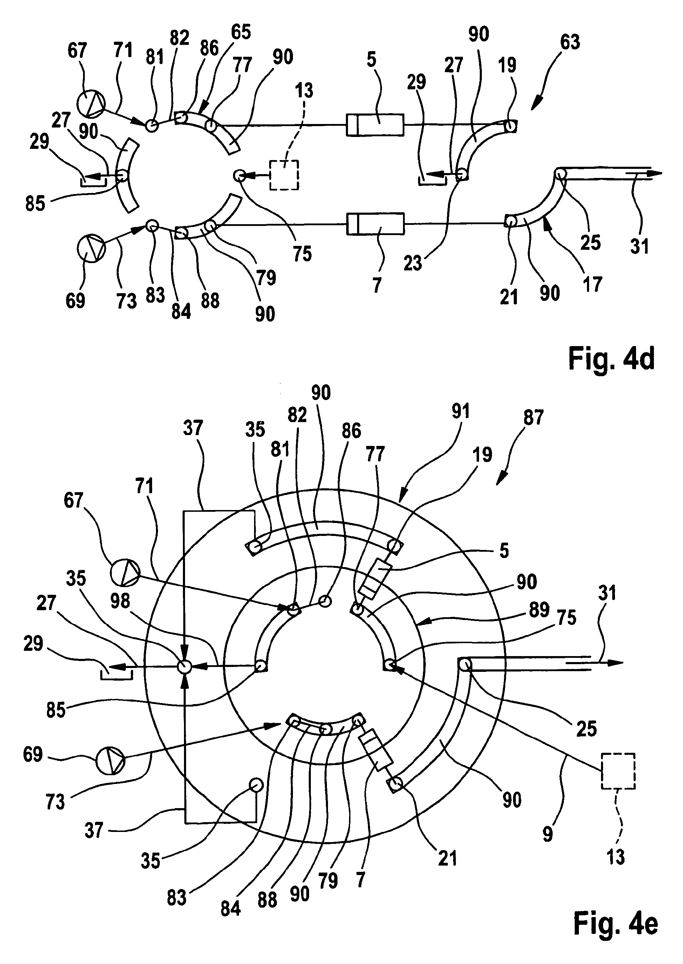

The multi-route switching device 17 can realize two settings and the multi-route switching device 65 can realize three setting. Consequently, they can realize six settings in combination. For controlling the microfluidic device 63, only four settings are necessary: Fig. 4a shows a first setting "a", Fig. 4b a second setting "b", Fig. 4c a third setting "c", Fig. 4d a fourth setting "d".

In the following, the flow paths in the second setting "b" as shown in Fig. 4b are described exemplarily. The multi-route switching devices 17 and 65 comprise fluid conducting grooves 90 and parallel flow paths 82 and 84 for coupling the ports of the microfluidic device 63 as follows:

The first nano-pump 67 is coupled downstream via the first inlet port 81 to the second outlet port 85 by the second multi-route switching device 65. The second outlet port 85 can be coupled to the waste container 29.

The second nano-pump 69 is coupled downstream via the second inlet port 83 and the second column port 79 to the second combination column 7 by the second multi-route switching device 65 and in parallel by the second parallel flow path 84 via the second parallel port 88. The first parallel port 86 is sealed by the second multi-route switching device 65. The second combination column 7 is coupled downstream via the second inlet port 21 to the second outlet port 25 by the multi-route switching device 17. The second outlet port 25 of the microfluidic device 63 can be coupled to a laboratory apparatus (not illustrated), for example to a mass spectrometer - as symbolized by an arrow 31. For this purpose, the mass spectrometer or the microfluidic device 63 can comprise a spray tip (not illustrated).

The first combination column 5 is coupled upstream via the first column port 77 and the sample inlet port 75 to the sample-feeding device 13 by the second multi-route switching device 65 and downstream via the first inlet port 19 the first outlet port 23 to the waste container 29 by the multi-route switching device 17.

The second setting "b" results in two time-shifted processes executable in parallel by the microfluidic device 63:

The second combination column 7 can separate components of a liquid to be analyzed in the mass spectrometer or can be pre-conditioned, reconditioned or rather be flushed.

The first combination column 5 can be reloaded with a new sample concurrently.

Flow paths and processes resulting of the first setting "a" as illustrated in Fig. 4a of the multi-route switching devices 17 and 65 behave vice versa. The multi-route switching device 17 is rotated by 90° and the second multi-route switching device 65 is rotated by 60° compared to the positions in the second setting "b".

Fig. 4c and 4d illustrate the third and the fourth setting "c" and "d", wherein the multi-route switching device 65 is rotated just by 30° compared to the positions in the settings "a" or "b". In the settings "c" and "d" both nano pumps 67 and 69 are coupled concurrently to the combination columns 5 or rather 7 via the first parallel flow path 82 or rather the second parallel flow path 84 and via the second multi-route switching device 65. The combination columns 5 and 7 are coupled optionally to the waste 29 or to the second outlet port 25 of the microfluidic device 63 as described above.

The settings "c" and "d" result also in two time-shifted processes executable in parallel by the microfluidic device 63, wherein both columns 5 and 7 are coupled to a nano pump.

Figure 4e shows the same hydraulic functionality as described in Figures 4a to 4d but realized by a microfluidic chip 87. Therefore, only the differences are described.

The microfluidic chip 87 can interact with an inner six-port multi-route switching valve 89 and an outer six-port multi-route switching valve 91 - each symbolized by a circle. The valves are adapted for sealing and/or coupling one or more of the ports of the microfluidic chip 87.

Differing from the hydraulic layout as described in Figure 4a, three ports 35 of the outer six-port multi-route switching valve 91 of the microfluidic chip 87 are functionally combined as one port by two bypass flow paths 37 - illustrated by arrows. The ports 35 and the two bypass flow paths 37 fulfill the functionality of the first outlet port 23 as shown in Fig. 4a. The outlet port 85 can be coupled directly to the waste 29 or via a flow path 98 within the microfluidic chip 87 and via one of the ports 35 as shown in Fig 4e.

The valves 89 and 91 may have a cylindrical shape, wherein the outer six-port multi-route switching valve 91 may have the shape of a hollow cylinder. The inner six-port multi-route switching valve 89 can be arranged within the opening of the hollow cylinder of the outer six-port multi-route switching valve 91. The concentric valves 89 and 91 can be locked or adapted to be rotated separately. In this embodiment, the valves 89 and 91 are adapted to be rotated separately in steps of 30° - inner six-port multi-route switching valve 89 - or rather 60° - outer six-port multi-route switching valve 91. Each of the valves 89 and 91 comprise a face to seal the ports of the microfluidic chip 87. The face comprises grooves 90 to couple the ports. The valves can be set by rotating them at their cylindrical middle axis. The ports of the microfluidic chip 87 are arranged on two concentric circles in this embodiment. The setting shown in Fig. 4e corresponds to the second setting "b" as illustrated in Fig. 4b.

The valves 89 and 91 can be adapted to interact with more or less than six ports. The layout of the microfluidic chip 87 can for example be transformed to interact with one six-port and one ten-port multi-route switching valve.

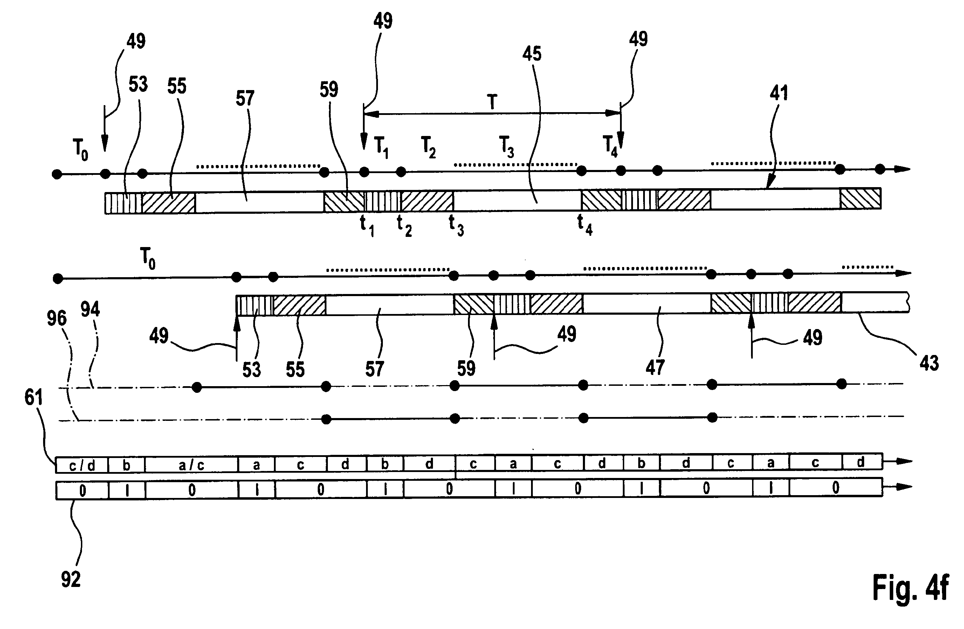

Fig. 4f shows a timing diagram of two parallelized processes 45 and 47 that are executable with the microfluidic device 63 or rather with the microfluidic chip 87 as described in Fig. 4a to 4e. Features that are substantially or functionally equal or similar will be referred to with the same reference signs as in Fig. 3.

The phases 53, 55, 57, and 59 are assigned as shown in Fig. 3.

A bar 61 symbolizes the settings "a" to "d" of the multi-route switching devices 17 and 65, indicated with the small letters a to d in sectors of the bar 61, wherein the length of each sector represents the time span needed for the according setting. The time spans of starting phases of Pre-conditioning for the processes 45 and 47 are indicated with the capital letter T0. For pre-conditioning, optional the settings are possible as indicated with two small letters in the bar 61.

A bar 92 indicates the operating state of the sample-feeding device 13. The digit "0" indicates switched off and the digit "1" indicates switched on or rather injecting a sample into the sample inlet port 75. The sample-feeding device 13 may be switched off to release the pressure form the system at sample inlet port 75.

A first bar 94 assigned to the first process 45 and a second bar 96 assigned to the second process indicate with dotted and not dotted sections the operation state of a mass spectrometer possibly coupled to the outlet port 25. Sections with lines (not dotted) indicate that relevant data is produced by the assigned process and relevant liquid is injected into the mass spectrometer. It is obvious that always one of the processes 45 and 47 produces relevant liquid injected into the mass spectrometer. Consequently, a degree of utilization of the mass spectrometer of 100% can be reached, after the time spans of the pre-conditioning phases as indicated with the capital letters T0 of the processes 45 and 47 are elapsed.

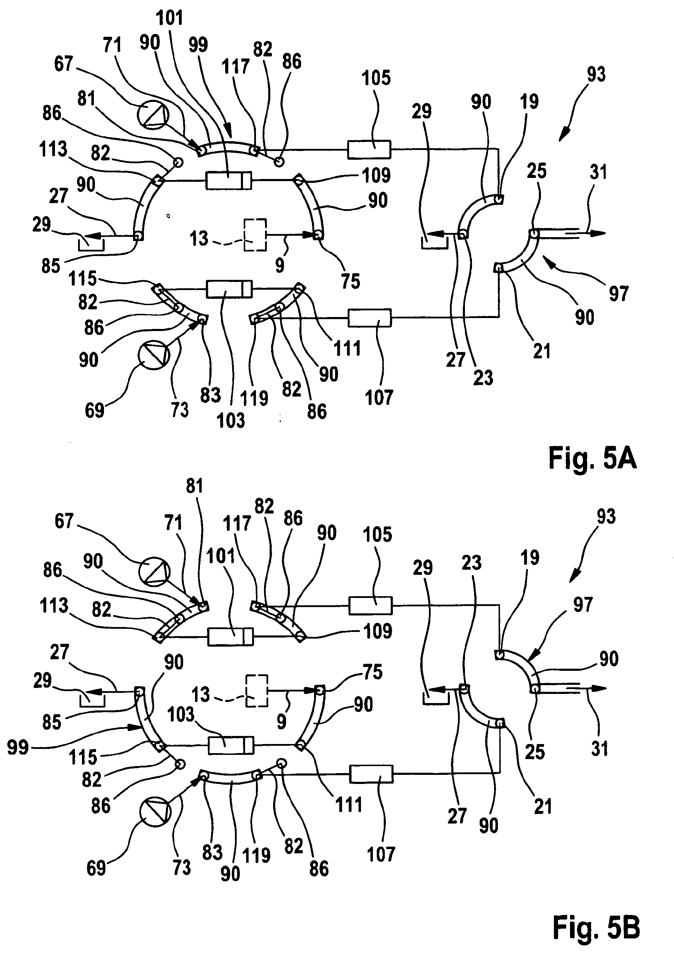

Figure 5A to 5D show another microfluidic chip 93 comprising a four-port multi-route switching valve 97 and a ten-port multi-route switching valve 99.

The microfluidic chip 93 is adapted to execute two analyzing processes each with one enrichment column and one reversed phase column. Analyzing processes with an enrichment column and one reversed phase column are well known in the art and consequently not described in detail.

The microfluidic chip 93 comprises a first enrichment column 101 and a second enrichment column 103, a first reversed phase column 105 and a second reversed phase column 107. The enrichment columns can be adapted for a relative great flow rate compared to the reversed phase columns for reducing the enriching time.

The ten-port multi-route switching valve 99 is adapted for coupling and/or sealing fourteen ports 75, 81, 83, 85, 86, 109, 111, 113, 115, 117, and 119 of the microfluidic chips 93:
- the sample inlet port 75 which can be coupled to the sample-feeding device 13;
- the first inlet port 81 and the second inlet port 83 which can be coupled to the nano-pumps 67 and 69;
- the second outlet port 85 which can be also coupled to the waste container 29 - also symbolized with an arrow 27;
- four parallel ports 86 each coupled to a parallel flow path 82 within the microfluidic chip 93;
- a first enrichment column inlet port 109 and a second enrichment column inlet port 111;
- a first enrichment column outlet port 113 and a second enrichment column outlet port 115;
- a first column inlet port 117 and a second column inlet port 119.

The functionality of the four-port multi-route switching valve 97 is equivalent to the functionality of the multi-route switching device 17 as shown in the Figure 2 and 4a to 4d. Instead of the first combination column 5 and the second combination column 7 of the chips 1 and 87 the first reversed phase column 105 and the second reversed phase column 107 of the microfluidic chip 93 are coupled to the switching ports 19 and 21 of the four-port multi-route switching valve 97.

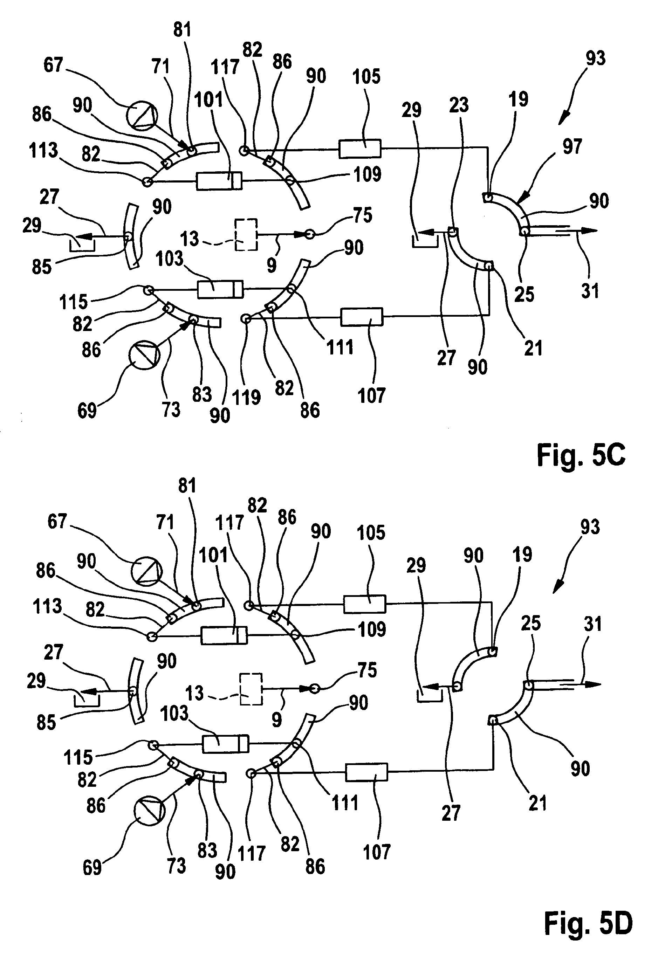

The four-port multi-route switching valve 97 can realize two settings and the ten-port multi-route switching valve 99 can realize three settings. Consequently, they can realize six settings in combination. For controlling the microfluidic chip 93, only four settings are necessary: Fig. 5A shows a first setting "A", Fig. 5B a second setting "B", Fig. 5C a third setting "C", Fig. 5D a fourth setting "D".

Two possible additional settings are not necessary for steering and controlling the two processes in parallel.

In the following, the flow paths in the first setting "A" as shown in Fig. 5A are described exemplarily. The multi-route switching valves 97 and 99 comprise fluid conducting grooves 90 and parallel flow paths 82 for coupling the ports of the microfluidic device 93 as follows:

The first nano-pump 67 is coupled downstream via the first inlet port 81 to the first column inlet port 117 by the ten-port multi-route switching valve 99. The first reversed phase column 105 is coupled upstream to the first column inlet port 117 and can be coupled downstream to the waste container 29 via the first inlet port 19, via the four-port multi-route switching valve 97, and via the first outlet port 23 of the microfluidic chip 93.

The above described flow path can be used for reconditioning or rather flushing the first reversed phase column 105 after an analysis.

The second nano-pump 69 is coupled downstream via the second inlet port 83 via the ten-port multi-route switching valve 99, and concurrently parallel via the parallel port 86 via the parallel flow path 82, to the second enrichment column outlet port 115. The second enrichment column 103 is coupled upstream to the second enrichment column outlet port 115. The second enrichment column 103 is coupled downstream to the second reversed phase column 107 via the second enrichment column inlet port 111 via the ten-port multi-route switching valve 99 of the microfluidic chip 93 and parallel via the parallel flow path 82 and via the second column inlet port 119. The second reversed phase column 107 is coupled upstream to the second column inlet port 119 and downstream to the second outlet port 25 via the four-port multi-route switching valve 97. The second outlet port 25 of the microfluidic chip 93 can be coupled to a mass spectrometer, for example by another flow path integrated in the microfluidic chip 93 coupled to a spray tip - as symbolized with the arrow 31.

The above described flow path can be used for an analysis of liquid with the analytical elements, the second enrichment column 103 and the second reversed phase column 107 of the microfluidic chip 93.

The first enrichment column 101 is coupled upstream to the sample inlet port 75 via the first enrichment column inlet port 109 and via the ten-port multi-route switching valve 99 and downstream to the second outlet port 85 via the first enrichment column outlet port 113 and via the ten-port multi-route switching valve 99. The sample inlet port 75 can be coupled to the sample-feeding device 13. The second outlet port 85 can be coupled to the waste container 29.

The above described flow path can be used for enriching a sample on the first enrichment column 101 or for cleaning the first enrichment column 101.

Flow paths and processes resulting of the second setting "B" as described in Fig. 5B of the four-port multi-route switching valve 97 and the ten-port multi-route switching valve 99 behave vice versa. The four-port multi-route switching valve 97 is rotated by 90° and the ten-port multi-route switching valve 99 is rotated by 36° compared to the positions in the second setting "B".

Fig. 5C and 5D illustrate the third and the fourth setting "C" and "D", wherein the ten-port multi-route switching valve 99 is rotated just by 18° compared to the positions in the settings "A" or "B". In the settings "C" and "D", both nano pumps 67 and 69 are coupled to the enrichment columns 101 or rather 103 via the ten-port multi-route switching valve 99 and via the parallel flow paths 82. The reversed phase columns 105 or rather 107 are coupled optionally to the waste 29 or to the second outlet port 25 as described above.

The microfluidic chip 93 comprises the valves 97 and 99 arranged in two separate positions. In embodiments, the valves 97 and 99 for another microfluidic chip are built as concentric valves. This results in shorter flow paths with lower volumes within the resulting microfluidic chip and consequently in a higher measuring accuracy.

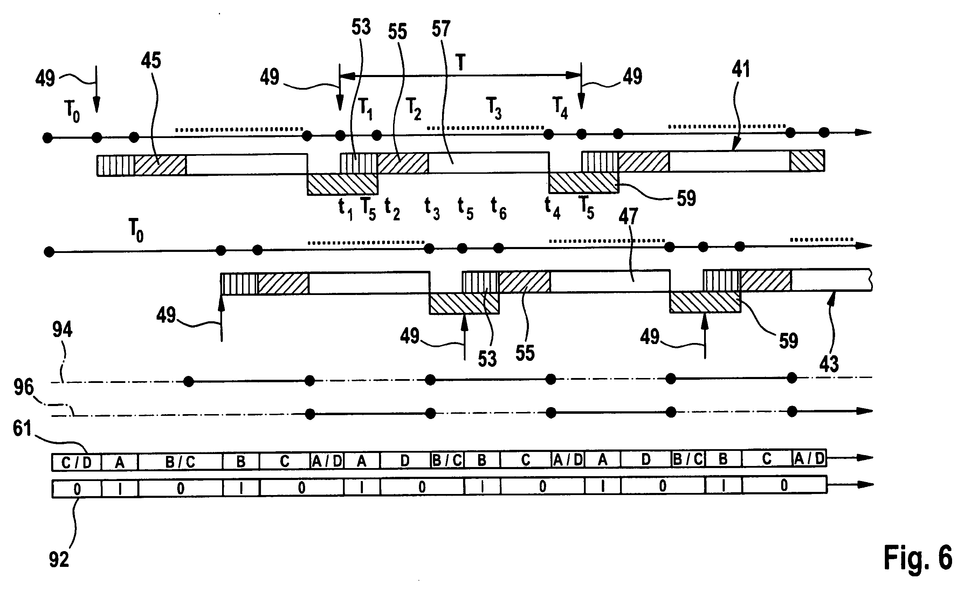

Fig. 6 shows a timing diagram of two processes 45 and 47 that are executable on the microfluidic chip 93 as described in Fig. 5A to 5D. Features that are substantially or functionally equal or similar will be referred to with the same reference signs as in Fig. 3 and Fig. 4f. Therefore, only the differences are described.

In the following, the first process 45 is described exemplarily - first bar 41. The phases 53, 55, 57, and 59 are assigned as follows: A first phase 53 - vertical hatching - corresponds with the steps of enriching a sample in the first enrichment column 101 by the sample-feeding device 13. A second phase 55 - inclined hatching - corresponds with the step of starting a gradient of solvent through the first enrichment column 101 and the first reversed phase column 105 by the first nano-pump 67. A third phase 57 - without hatching - corresponds with the step of eluting the sample from the first reversed phase column 105 by the first nano-pump 67 through the second enrichment column 103 and spraying it into a mass spectrometer. A fourth phase 59 - declined hatching - corresponds with the step of reconditioning the first reversed phase column 105 by the first nano-pump 67. The fourth phase 59 of reconditioning can be parallelized with the first phase 53. The fourth phase 59 can be continued until the end of the first phase 53 for a time span T5.

The processes 45 and 47 are time-shifted by the ten-port multi-route switching valve 99 and the four-port multi-route switching valve 97 of the microfluidic chip 93.

A bar 61 symbolizes the different settings "A" to "D" of the ten-port multi-route switching valve 99 and of the four-port multi-route switching valve 97 with capital letters A to D written in sectors of the bar 61. The length of the time axis of each sector represents the time span for the indicated setting. The valves are switched concurrently. Optional settings are indicated with two capital letters separated by a slash.

The starting times of the four phases 53, 55, 57 and 59 of the first repetition of the process 45 are symbolized by the small letters t1, t2, t3, and t4. The setting of the valves 97 and 99 has to be changed at t1, t2, t3 and t4 and optionally at t5 and additionally at t6 during the time span T3 of the third phase 57. Besides this, the settings have to be changed at equivalent points of time during the following repetitions of the processes 45 and 47. For time shifting the processes 45 and 47, the second process 47 has to be started delayed. In this embodiment the delay is equal to T divided by two. During time spans T0; the microfluidic chip 93 can be pre-conditioned.

The two processes 45 and 47 are executed in this embodiment mainly each by two analytical elements, by the first enrichment column 101 and the first reversed phase column 105 - first process 45 - and the second enrichment column 103 and the second reversed phase column 107 - second process 47 - of the microfluidic chips 93.

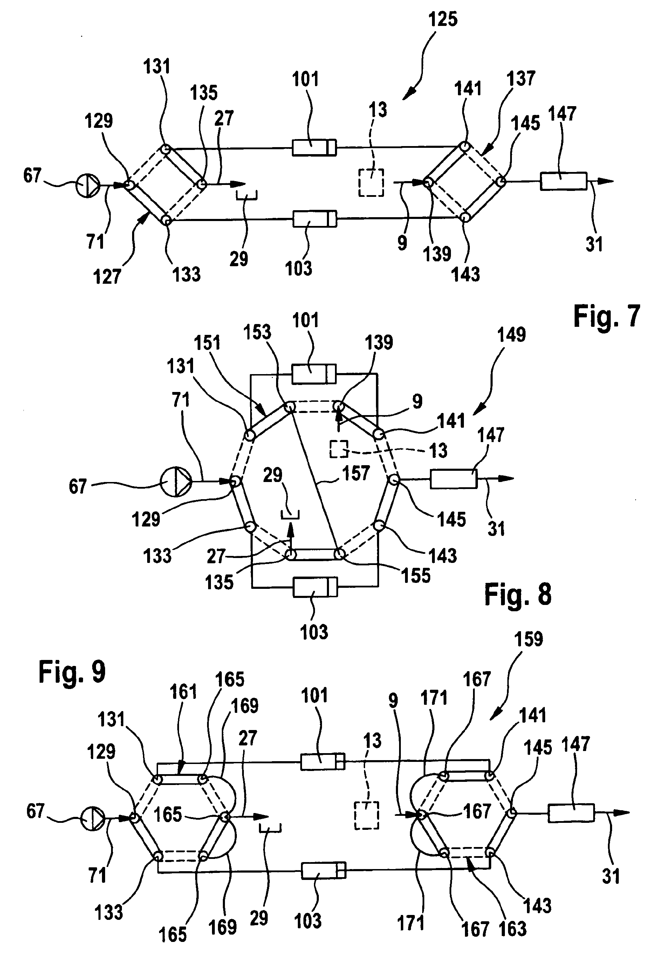

Fig. 7 shows a layout of another microfluidic device 125;

The microfluidic device 125 comprises a multi-route switching device, comprising a first multi-route switching device 127, which is adapted for coupling and/or sealing four ports 129, 131, 133, and 135 of the microfluidic device 125, and a second multi-route switching device 137, which is adapted for coupling and/or sealing four ports 139, 141, 143, and 145 of the microfluidic device 125.

Differing from the microfluidic device 3 as shown in Figure 1, and the microfluidic device 63 as shown in Figure 4A the microfluidic device 125 is adapted to be coupled with just one sample-feeding device 13 - symbolized by the arrow 9 - and to be coupled with just one microfluidic feeding device - symbolized by the arrow 71 - in this embodiment with one nano-pump 67.

The first multi-route switching device 127 is adapted for coupling and/or sealing the ports 129, 131, 133, and 135 of the microfluidic device 125 as follows:
- a inlet port 129 which can be coupled to the nano-pump 67;
- a first enrichment column inlet port 131 which is coupled to the first enrichment column 101 and a second enrichment column inlet port 133 which is coupled to the second enrichment column 103; and
- a outlet port 135 which can be coupled to the waste container 29 - symbolized with the arrow 27.

The second multi-route switching device 137 is adapted for coupling and/or sealing the ports 139, 141, 143, and 145 of the microfluidic device 125 as follows:
- a inlet port 139 which can be coupled to the sample-feeding device 13;
- a first enrichment column outlet port 141 which is coupled to the first enrichment column 101 and a second enrichment column outlet port 143 which is coupled to the second enrichment column 103; and
- a column outlet port 145 which is coupled to a reversed phase column 147.

The multi-route switching devices 127 and 137 can realize each two settings, consequently four settings in combination. For controlling the microfluidic device 125, only two settings are necessary. A first setting is symbolized by doted lines and a second one by continuous. Consequently, the multi-route switching devices 127 and 137 are in this embodiment switched concurrently.

In the following, the flow paths in a first setting symbolized by the dotted lines are described exemplarily. Ports, which are connected in the drawing with dotted lines, are coupled to each other in the first setting:

The first enrichment column 101 is coupled upstream to the nano-pump 67 via the first enrichment column inlet port 131, via the first multi-route switching device 127, and via the inlet port 129. The first enrichment column 101 is coupled downstream to the reversed phase column 147 via the first enrichment column outlet port 141, via the second multi-route switching device 137, and via the column outlet port 145. The reversed phase column 147 can be coupled to a laboratory apparatus - symbolized by the arrow 31.

This flow path can be used for a first analyzing process.

The second enrichment column 103 can be coupled upstream to the sample-feeding device 13 via the second enrichment column outlet port 143, via the second multi-route switching device 137, and via the inlet port 139 - symbolized with the arrow 9. The second enrichment column 103 is coupled downstream to the waste container 29 via the second enrichment column inlet port 133, via the first multi-route switching device 127, and via the outlet port 135 - symbolized with the arrow 27.

This flow path can be used for enriching a sample on the second enrichment column 103. The fluid direction during the enriching process in this flow path is inversed to the fluid direction in the second enrichment column 103 during the analyzing process and eluting the sample.

The microfluidic device 125 can execute an analyzing and enriching process in parallel. Compared to devices without parallel processes the process time needed for the enriching process can be saved. This is in particular practicable for processes with a relative short analysis time.

Flow paths and processes resulting of the second setting of the multi-route switching devices 127 and 137 behave vice versa.

Figure 8 shows the same hydraulic functionality as described in Figure 7 realized by a microfluidic chip 149. Therefore, only the differences are described.

The microfluidic chip 149 is adapted for coupling with only one multi-route switching device 151. This multi-route switching device 151 is adapted for coupling and/or sealing ten ports 129, 131, 133, and 135, 139, 141, 143, and 145, and 153, 155 of the microfluidic chip 149:
- the ports 129, 131, 133, and 135 and the ports 139, 141, 143, and 145 with a functionality as described above; and
- a first transfer port 153 and a second transfer port 155.

The multi-route switching device 151 can be a cylindrical ten-port multi-route switching valve. The ten ports 129, 131, 133, and 135 and 139, 141, 143, and 145, 153, and 155 are arranged on a circle line equal distanced.

The first transfer port 153 and the second transfer port 155 are coupled to a transfer flow path 157 of the microfluidic chip 149 crossing the midpoint of the circle line.

In the following, the flow paths in a first setting symbolized by the dotted lines are described exemplarily. Ports, which are connected in the drawing with dotted lines, are coupled to each other in the first setting:

Differing from the device as shown in Figure 7, the second enrichment column 103 can be coupled upstream to the sample-feeding device 13, but via the second enrichment column outlet port 143, via the multi-route switching device 151, via the second transfer port 155, via the transfer flow path 157 of the microfluidic chip 149, via the first transfer port 153, via the multi-route switching device 151, and via the inlet port 139.

The other flow paths are functional equal to the flow paths of the microfluidic device 125, but realized with the multi-route switching device 151.

Flow paths and processes resulting of the second setting of the multi-route switching device 151 behave vice versa.

Figure 9 shows the same hydraulic functionality as described in Figure 7 realized by a microfluidic chip 159. Therefore, only the differences are described.

The microfluidic chip 159 comprises a multi-route switching device, comprising a first multi-route switching valve 161, which is adapted for coupling and/or sealing six ports 129, 131, 133, and 165 of the microfluidic chip 159, and a second multi-route switching valve 163, which is adapted for coupling and/or sealing six ports 141, 143, 145, and 167 of the microfluidic chip 159.

Three ports 165 of the microfluidic chip 159 for coupling with the first multi-route switching valve 161, and three ports 167 of the microfluidic chip 159 for coupling with the second multi-route switching valve 163 are each functionally combined as one port by two bypass flow paths 169 or rather 171. The ports 165 or rather 167 and the two bypass flow paths 169 or rather 171 fulfill the functionality of the outlet port 135 or rather the inlet port 139 as shown in Fig. 7.

Apart from the additional ports 165, 167 and the bypass flow paths 169, 171 the resulting flow paths and the executable processes are the same as described above in Figure 7.

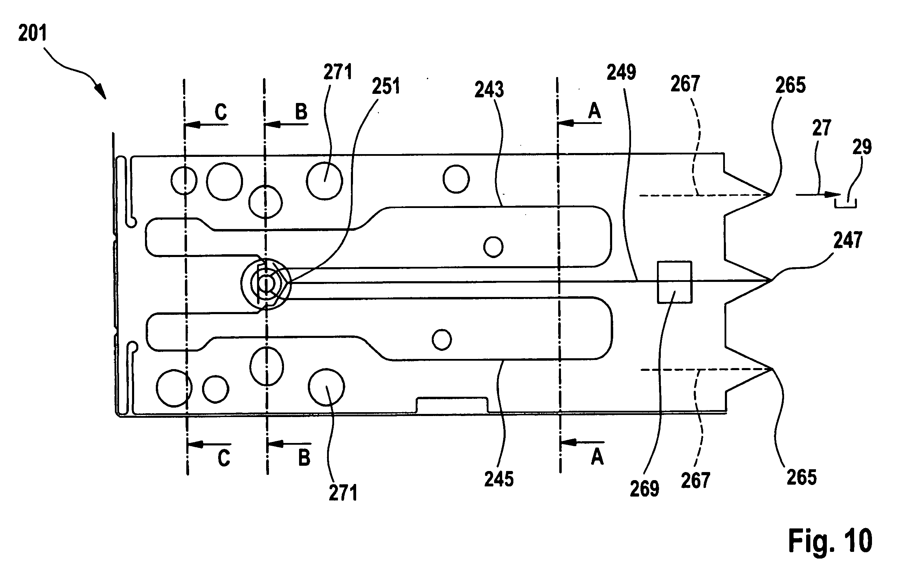

Fig. 10 shows a schematic layout of a microfluidic chip 201 showing microfluidic structures, in particular flow paths and analytical columns.

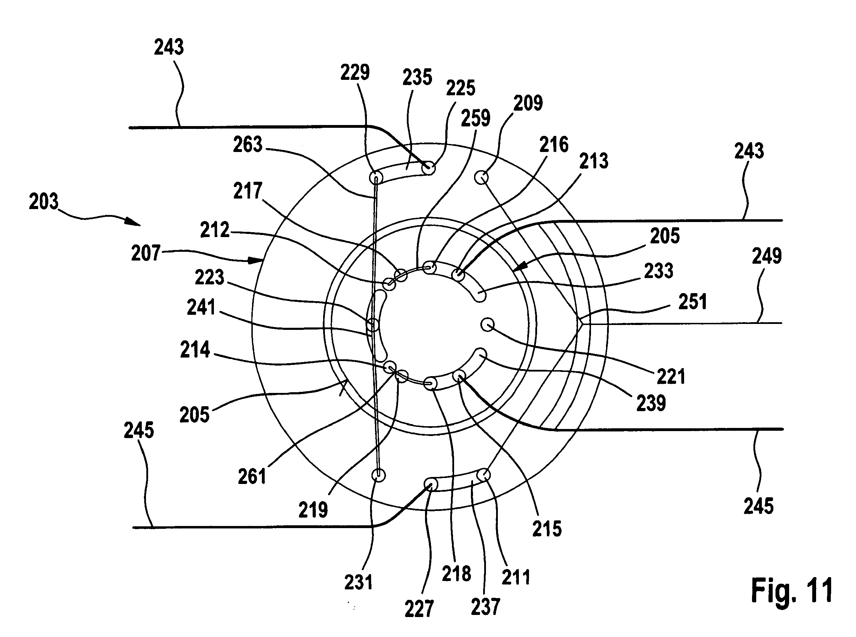

Fig. 11 shows a detailed view of the microfluidic chip 201 as shown in Fig. 10 together with a multi-route switching device 203. The multi-route switching device 203 comprises an inner six-port multi-route switching valve 205 and an outer six-port multi-route switching valve 207 with fluid conducting grooves 90. The valves 203 and 205 are adapted for sealing and/or coupling one or more ports - 12 ports 209 to 231 in this embodiment- of the microfluidic chip 201.

The valves 205 and 207 have essentially a cylindrical shape, wherein the outer six-port multi-route switching valve 207 has essentially the shape of a hollow cylinder. The inner six-port multi-route switching valve 205 is arranged within the opening of the hollow cylinder of the outer six-port multi-route switching valve 207. The concentric valves 205 and 207 are adapted to be rotated separately. Each of the valves 205 and 207 comprise a face to seal the ports of the microfluidic chip 201. Each face comprises grooves 233 to 241 to couple the ports 209 to 231 of the microfluidic chip 201. The valves can be set by rotating them at their cylindrical middle axis. The ports 209 to 231 of the microfluidic chip 201 are arranged on circles in this embodiment.

The microfluidic chip 201 comprises a first combination column 243, a second combination column 245, a spray tip 247 and a flow path 249 coupled to the spray tip 247. The flow path 249 comprises a forking 251 coupled to a first analysis port 209 and a second analysis port 211.

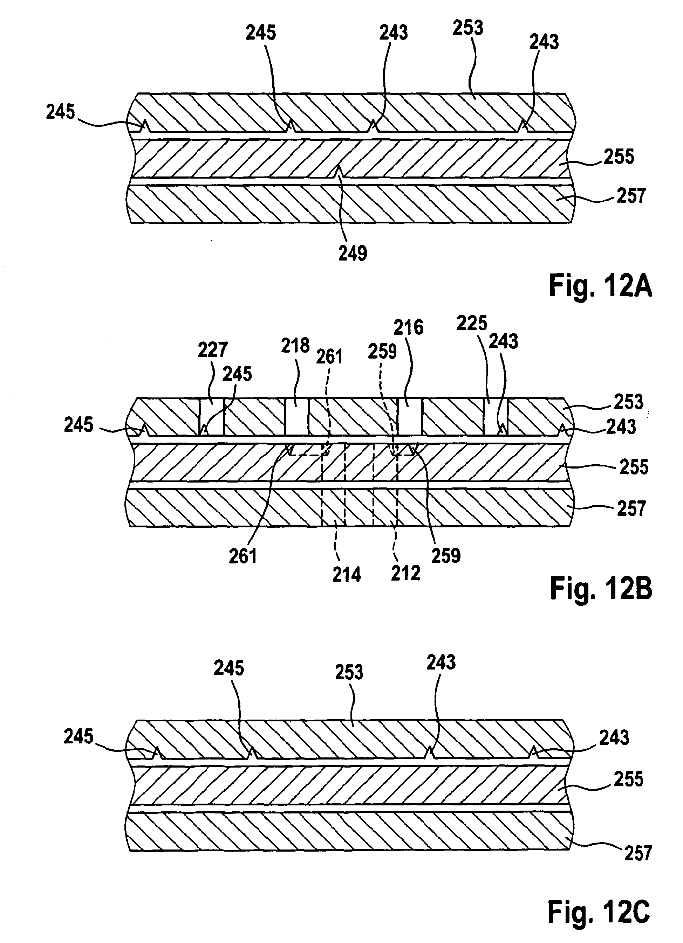

Fig. 12A, 12B, and 12C show different cross-sectional views of the device of Figure 10, taken along the lines A - A, B - B and C - C of Figure 10.

The microfluidic chip 201 comprises three layers, a top layer 253, a middle layer 255, and a bottom layer 257.

The top layer 253 comprises the combination columns 243 and 245. The middle layer 255 comprises the flow path 249 as shown in Figure 12A with the forking 251. The middle layer 255 comprises two flow paths 259 and 261 each coupled to an inlet port 212 or rather 214, an outlet port 217 or rather 219, and an parallel port 216 or rather 218 of the microfluidic chip 201. The inlet ports 212 and 214 are inserted in the bottom layer 257 and in the middle layer 255, for example by through bores - as indicated dotted in Fig. 12B. The outlet ports 217 and 219 are sited on the top side of the microfluidic chip 201 an can be realized by holes in the middle layer 255 and the top layer 253 of the microfluidic chip 201.

The inlet ports 212 and 214 can be coupled at the bottom side of the microfluidic chip 201 to two nano-pumps. Inflowing liquid can flow from the bottom side of the microfluidic chip 201 through the holes through the parallel flow paths 259 and 261 of the middle layer 255 of the microfluidic chip 201 to the outlet ports 217 and 219 and to the parallel ports 216 and 218 to the top side of the microfluidic chip 201.

The flow path 249 is implemented in the middle layer 255 and the first combination column 243 and second combination column 245 are implemented in the top layer 253. The first combination column 243 and second combination column 245 cross the forking 251 of the flow path 249. This is possible because the middle layer 255 separates these flow paths.

In the following, the flow paths in a first setting of the valves 205 and 207 exemplarily are described by referring to the Figure 11:

The first combination column 243 can be coupled downstream to a waste container via a first column port 225, via a second outer groove 235 of the outer six-port multi-route switching valve 207, via a first waste port 229, via a waste flow path 263, and via a waste outlet port 223 at the bottom side of the microfluidic chip 201.

The waste flow path 263 is implemented in the middle layer 255 of the microfluidic chip 201. The waste container can be coupled at the bottom side of the microfluidic chip 201 to the waste outlet port 223. The waste outlet port 223 can be realized by a hole through all layers 253, 255, and 257 of the microfluidic chip 201.

The flow path described above can be used for bringing a gradient of solvent through the first combination column 243, for reconditioning, and/or pre-conditioning it, for example by a nano-pump coupled to the inlet port 212.

The second combination column 245 can be coupled upstream to a nano-pump via a column inlet port 215 at the top side of the microfluidic chip 201, via a inner groove 239 of the inner six-port multi-route switching valve 205, via the second parallel flow path 261, and via the second inlet port 214 at the bottom side of the microfluidic chip 201. The second combination column 245 can be coupled downstream to a laboratory apparatus (not shown) via a second column port 227, via a second outer groove 237 of the outer six-port multi-route switching valve 207, via a second analysis port 211, via the forking 251 oft the flow path 249, via the flow path 249, and via the spray tip 247 of the microfluidic chip 201.

The flow path described above can be used for analyzing a liquid by a combination column as known in the art including the steps of pre-conditioning and reconditioning the column.

A sample inlet port 221, realized by a hole through all layers 253, 255, and 257 of the microfluidic chip 201, is sealed in this setting by the six-port multi-route switching valve 205. The sample inlet port 221 can be coupled at the bottom side of the microfluidic chip 201 to a sample-feeding device. For injecting a sample via a column port 213 and the column port 215 to one of the columns 243 or 245, the inner six-port multi-route switching valve 205 can be rotated - from the first setting as described above - by an angle of 30° clockwise or rather counterclockwise for coupling the sample inlet port 221 with the first combination column 243 or rather with the second combination column 245.

The microfluidic chip 201 is adapted to execute two processes in parallel as described above.

The valves 205 and 207 can be adapted to interact with more or less than six ports. The layout of the microfluidic chip 201 can for example be transformed to interact with one six-port and one ten-port multi-route switching valve.

In another embodiment, the microfluidic chip 201 can comprise two or more spray tips 265 connected to flow paths 267 assigned to processes executable with the microfluidic chip 201. Each spray tip can be assigned to one process.

According to a preferred embodiment, the spray tips are moveable from a first to second position. The spray tips can be positioned relatively towards a mass spectrometer to inject relevant components of the samples into the mass spectrometer. Non-relevant, soiled or harmful liquid are not injected into the mass spectrometer. Such liquid is normally separated from the mass spectrometer by a valve leading the liquid into a waste container. With two or more spray tips 247, 265, this unnecessary liquid can be discarded or directed to the waste container 29 by the spray tip/s 247, 265 without using a valve.

In another preferred embodiment the microfluidic chip 201 can have a detection area 269, for example an optical detection area, to analyze the liquid within the microfluidic chip 201, for example within the flow path 249.

In a further preferred embodiment, the microfluidic chip 201 comprises at least one hole 271 to align the microfluidic chip 201, in particular the ports of the microfluidic chip 201, relatively to the valves 205 and 207. In Figure 10 the microfluidic chip 201 comprises two holes 271. The microfluidic chip 201 can be fitted to two pins (not shown) by the holes 271 to align the microfluidic chip 201. The valves 205 and 207 may be free to rotate but positioned in a constant position to the pins.

Finally, in embodiments, the microfluidic chip comprises more then two enrichment columns. Advantageously, soiled enrichment columns can be separated by an according valve from the processes favor of new and nor soiled ones.

In the following, a method of operating a miniaturized microfluidic device is described by referring to the Figures above:

A first process 45 is executed in parallel to a second process 47 with the microfluidic device 3. It is possible to adapt the microfluidic device 3 for executing more than two processes in parallel. The processes 45 and 47 can be executed time-shifted. The processes run by analytical elements adapted for analyzing and/or separating components of a liquid, for example combination columns 5, enrichment columns 101, reversed phase columns 105, nano-pumps 67, sample-feeding devices 13, laboratory apparatuses, or alike.

In the following, another method of operating a miniaturized microfluidic device is described by referring to the Figures above:

Firstly, a first data stream is loaded from a laboratory apparatus at the point of time t3 as shown in the Figures 3 and 6. At t3 starts the laboratory apparatus producing relevant data from the third phase 57 of the first process 45. After that a second data stream is loaded from the laboratory apparatus at the point of time t4 as shown in the Figures 3 and 6. At t4 starts the laboratory apparatus producing relevant data from third phase 57 of the second process 47.

Before loading the first data stream a first data file can be opened and before loading the second data stream a second data file can be opened for loading the first data stream to the first data file and loading the second data stream to the second data file. The data files can be closed after loading them with the data streams.

While the data files are opened and/or closed, switching pulses can be generated for triggering a movement of at least one multi-route switching device 3, 17, 65, 127, 137, 151, 161, 163, 203 with the generated switching pulse for changing the valve setting.

## Claims

1. An arrangement for separating and/or analyzing liquid, comprising:
a microfluidic chip (1;87;93;149;159;201) comprising
• one or more inlet ports (9, 11),
• two parallel microfluidic flow paths, each coupled to one of the one or more inlet ports (9, 11), and each comprising an analytical element (5, 7) adapted for analyzing and/or separating components of a liquid within the flow path, and
• one or more outlet ports (23, 25), each coupled to one or more of the analytical elements (5, 7),
• wherein the microfluidic chip (1;87;93;149;159;201) is adapted to execute at least two time-shifted processes (45,47) in parallel; and
a multi-route switching valve (33;89,91;97,99;151;161;163;205,207) for interacting with at least one of the one or more inlet ports (9, 11) and the one or more outlet ports (23, 25), so that the at least two time-shifted processes (45,47) are executed in parallel in the analytical elements of the microfluidic chip (1;87;93;149;159;201).

2. The arrangement of claim 1, wherein
the multi-route switching valve (33;89,91;97,99;151;161;163;205,207) is adapted for interacting with an array of ports of the microfluidic chip (1;87;93;149;159;201),

3. The arrangement of claim 1 or 2, wherein each analytical element comprises at least one of the following features:
• a detection area (269),
• a spray tip (247;265),
• a reversed phase column (105,107),
• a combination column (5,7),
• an enrichment column (101,103),

4. The arrangement of any one of the above claims, wherein
the microfluidic chip (1;87) comprises a first combination column (5) to execute a first process (45) of the time-shifted processes (45,47), and a second combination column (7) to execute a second process (47) of the time-shifted processes (45,47).

5. The arrangement of the preceding claim, wherein
a first nano-pump (67) is coupled to the first combination column (5) while a second nano-pump (69) is coupled to a waste outlet port (85) of the microfluidic chip by the multi-route switching valve (65), and wherein the sample-feeding device (13) is coupled to the second combination column (7).

6. The arrangement of any one of the above claims, wherein
the microfluidic chip (1;87;93;149;159;201) comprises - as the analytical elements - a first enrichment column (101) to execute a first process (45) of the time-shifted processes (45,47), and a second enrichment column (103) to execute a second process (47) of the time-shifted processes (45,47).

7. The arrangement of the preceding claim, wherein the first enrichment column (101) is coupled to a first reversed phase column (105) to execute the first process (45), and the second enrichment column (103) is coupled to a second reversed phase column (107) to execute the second process (47).

8. The arrangement of any one of the above claims, comprising at least one of the features:
at least one analytical element is coupled to another analytical element by the multi-route switching valve (33;89,91;97,99;151;161;163;205,207);
the microfluidic chip (1;87;93;149;159;201) is coupled concurrently to a first sample-feeding device (13) and to a second sample-feeding device (15);
the microfluidic chip (1;87;93;149;159;201) is coupled to a first and a second microfluidic feeding device (67,69) and to one sample-feeding device (13).

9. The arrangement any one of the above claims, wherein the microfluidic chip (1;87;93;149;159;201) comprises a reversed phase column (147), a first enrichment column (101), and a second enrichment column (103), and is coupled to one microfluidic feeding device (67) and to a sample-feeding device (13).

10. The arrangement of the preceding claim, wherein the microfluidic feeding device (67) is coupled to the first enrichment column (101) coupled to the reversed phase column (147) by the multi-route switching valves (151;161,163), while the sample-feeding device (13) is coupled to the second enrichment column (103) coupled to the waste outlet port (135) of the microfluidic chip (149;159) by the multi-route switching valves (151:161,163), and vice versa.

11. Method of operating the arrangement of any one of the preceding claims, comprising the steps of:
- executing a first process (45) with one of the analytical elements, and
- executing at least one additional process (47) in parallel and time-shifted to the first process (45) with the other one of the analytical elements.

12. A software program or product, preferably stored on a data carrier, for executing or controlling the preceding method, when run on a data processing system such as a computer.

## Patentansprüche

1. Anordnung zum Trennen und/oder Analysieren einer Flüssigkeit, wobei die Anordnung aufweist:
• einen Mikrofluid-Chip (1; 87; 93;149; 159; 201), der aufweist:
• einen oder mehrere Einlassstutzen (9, 11),
• zwei parallele Mikrofluid-Fließwege, die jeweils mit einem oder mehreren der Einlassstutzen (9, 11) verbunden sind und je ein Analyseelement (5, 7) zum Analysieren und/oder Trennen der Komponenten einer Flüssigkeit innerhalb des Fließweges aufweisen, und
• einen oder mehrere Auslassstutzen (23, 25), die jeweils mit einem oder mehreren der Analyseelemente (5, 7) verbunden sind,
• wobei der Mikrofluid-Chip (1; 87; 93;149; 159; 201) zum parallelen Ausführen von mindestens zwei zeitlich versetzten Prozessen (45, 47) dient,
ein Mehrwege-Schaltventil (33;89,91;97,99;151;161;163;205,207) zum Zusammenwirken mit mindestens einem oder mehreren der Einlassstutzen (9, 11) und dem einen oder den mehreren Auslassstutzen (23, 25) derart, dass die mindestens zwei zeitlich versetzten Prozesse (45,47) in den Analyseelementen des Mikrofluid-Chips (1;87;93;149;159;201) parallel ausgeführt werden.

2. Anordnung nach Anspruch 1, wobei:
das Mehrwege-Schaltventil (33;89,91;97,99;151;161;163;205,207) zum Zusammenwirken mit einer Anordnung von Anschlussstutzen des Mikrofluid-Chips (1;87;93;149;159;201) dient.

3. Anordnung nach Anspruch 1 oder 2, wobei jedes Analyseelement mindestens eines der folgenden Merkmale aufweist:
• einen Detektionsbereich (269),
• eine Sprühdüse (247;265),
• eine Umkehrphasen-Trennsäule (105,107),
• eine Kombinations-Trennsäule (5,7),
• eine Anreicherungs-Trennsäule (101,103),

4. Anordnung nach einem der obigen Ansprüche, wobei
der Mikrofluid-Chip (1 ;87) eine erste Kombinations-Trennsäule (5) zum Ausführen eines ersten Prozesses (45) der zeitlich versetzten Prozesse (45,47) und eine zweite Kombinations-Trennsäule (7) zum Ausführen eines zweiten Prozesses (47) der zeitlich versetzten Prozesse (45,47) aufweist.

5. Anordnung nach dem vorhergehenden Anspruch, wobei
eine erste Nanopumpe (67) und eine zweite Nanopumpe (69) durch das Mehrwege-Schaltventil (65) mit der ersten Kombinations-Trennsäule (5) bzw. mit einem Entsorgungsstutzen (85) des Mikrofluid-Chips und die Probenzufuhreinrichtung (13) mit der zweiten Kombinations-Trennsäule (7) verbunden sind.

6. Anordnung nach einem der obigen Ansprüche, wobei
der Mikrofluid-Chip (1;87;93;149;159;201) - als Analyseelemente - eine erste Anreicherungs-Trennsäule (101) zum Ausführen eines ersten Prozesses (45) der zeitlich versetzten Prozesse (45, 47) und eine zweite Anreicherungs-Trennsäule (103) zum Ausführen eines zweiten Prozesses (47) der zeitlich versetzten Prozesse (45, 47) aufweist.

7. Anordnung nach dem vorhergehenden Anspruch, wobei die erste Anreicherungs-Trennsäule (101) mit einer ersten Umkehrphasen-Trennsäule (105) zum Ausführen des ersten Prozesses (45) und die zweite Anreicherungs-Trennsäule (103) mit einer zweiten Umkehrphasen-Trennsäule (107) zum Ausführen des zweiten Prozesses (47) verbunden ist.

8. Anordnung nach einem der obigen Ansprüche, die mindestens eines der folgenden Merkmale aufweist:
mindestens ein Analyseelement ist durch das Mehrweg-Schaltventil (33;89,91;97,99;151;161;163;205,207) mit einem anderen Analyseelement verbunden;
der Mikrofluid-Chip (1;87;93;149;159;201) ist gleichzeitig mit einer ersten Probenzufuhreinrichtung (13) und einer zweiten Probenzufuhreinrichtung (15) verbunden;
der Mikrofluid-Chip (1;87;93;149;159;201) ist mit einer ersten und einer zweiten mikrofluidischen Zufuhreinrichtung (67,69) und einer Probenzufuhreinrichtung (13) verbunden.

9. Anordnung nach einem der vorhergehenden Ansprüche, wobei der Mikrofluid-Chip (1;87;93;149;159;201) eine Umkehrphasen-Trennsäule (147), eine erste Anreicherungs-Trennsäule (101) und eine zweite Anreicherungs-Trennsäule (103) aufweist und mit einer mikrofluidischen Zufuhreinrichtung (67) und einer Probenzufuhreinrichtung (13) verbunden ist.

10. Anordnung nach dem vorhergehenden Anspruch, wobei die mikrofluidische Zufuhreinrichtung (67) durch die Mehrwege-Schaltventile (151;161;163) mit der ersten Anreicherungs-Trennsäule (101) und diese wiederum mit der Umkehrphasen-Trennsäule (147) verbunden ist, während die Probenzufuhreinrichtung (13) durch die Mehrwege-Schaltventile (151,161,163) mit der zweiten Anreicherungs-Trennsäule (13) und diese wiederum mit dem Entsorgungsstutzen (135) des Mikrofluid-Chips (149, 159) verbunden ist und umgekehrt.

11. Verfahren zum Betreiben der Anordnung nach einem der vorhergehenden Ansprüche, das die folgenden Schritte aufweist:
- Ausführen eines ersten Prozesses (45) mit einem der Analyseelemente, und
- paralleles und zeitlich zum ersten Prozess (45) versetztes Ausführen mindestens eines weiteren Prozesses (47) mit dem jeweils anderen Analyseelement.

12. Softwareprogramm oder -produkt, das vorzugsweise auf einem Datenträger gespeichert ist, zum Ausführen oder Steuern des vorhergehenden Verfahrens, wenn es auf einem Datenverarbeitungssystem wie zum Beispiel einem Computer ausgeführt wird.

## Revendications

1. Montage permettant de séparer et/ou d'analyser un liquide, comprenant :
une puce microfluidique (1 ; 87 ; 93 ; 149 ; 159; 201) comprenant
• un ou plusieurs orifices d'entrée (9, 11) ;
• deux voies d'écoulement microfluidique parallèles, raccordées chacune à un orifice parmi le ou les orifices d'entrée (9, 11), et comprenant chacune un élément analytique (5, 7) à même d'analyser et/ou de séparer des composants d'un liquide à l'intérieur de la voie d'écoulement, et
• un ou plusieurs orifices de sortie (23, 25), raccordés chacun à un ou plusieurs des éléments analytiques (5, 7) ;
• dans lequel la puce microfluidique (1 ; 87 ; 93 ; 149 ; 159 ; 201) est à même d'exécuter en parallèle au moins deux processus décalés dans le temps (45, 47), et
une vanne de commutation à plusieurs voies (33 ; 89 ; 91 ; 97 ; 99 ; 151; 161; 163 ; 205 ; 207) pour interagir avec au moins un orifice parmi le ou les orifices d'entrée (9, 11) et le ou les orifices de sortie (23, 25) , de sorte que les au moins deux processus décalés dans le temps (45, 47) soient exécutés en parallèle dans les éléments analytiques de la puce microfluidique (1 ; 87 ; 93 ; 149 ; 159 ; 201).

2. Montage suivant la revendication 1, dans lequel
la vanne de commutation à plusieurs voies (33 ; 89 ; 91 ; 97 ; 99 ; 151 ; 161 ; 163 ; 205 ; 207) est à même d'interagir avec un réseau d'orifices de la puce microfluidique (1 ; 87 ; 93 ; 149 ; 159 ; 201).

3. Montage suivant la revendication 1 ou 2, dans lequel chaque élément analytique comprend au moins une des particularités suivantes :
• une zone de détection (269) ;
• une buse (247 ; 265) ;
• une colonne à phase inversée (105, 107) ;
• une colonne de combinaison (5, 7), et
• une colonne d'enrichissement (101, 103).

4. Montage suivant l'une quelconque des revendications précédentes, dans lequel
la puce microfluidique (1 ; 87) comprend une première colonne de combinaison (5) pour exécuter un premier processus (45) parmi les processus décalés dans le temps (45, 47), et une deuxième colonne de combinaison (7) pour exécuter un deuxième processus (47) parmi les processus décalés dans le temps (45, 47).

5. Montage suivant la revendication précédente, dans lequel
une première nano-pompe (67) est raccordée à la première colonne de combinaison (5) tandis qu'une deuxième nano-pompe (69) est raccordée à un orifice de vidange (85) de la puce microfluidique par la vanne de commutation à plusieurs voies (65), et dans lequel le dispositif d'alimentation d'échantillon (13) est raccordé à la deuxième colonne de combinaison (7).

6. Montage suivant l'une quelconque des revendications précédentes, dans lequel
la puce microfluidique (1 ; 87 ; 93 ; 149 ; 159 ; 201) comprend - comme éléments analytiques - une première colonne d'enrichissement (101) pour exécuter un premier processus (45) parmi les processus décalés dans le temps (45, 47), et une deuxième colonne d'enrichissement (103) pour exécuter un deuxième processus (47) parmi les processus décalés dans le temps (45, 47).

7. Montage suivant la revendication précédente, dans lequel la première colonne d'enrichissement (101) est raccordée à une première colonne à phase inversée (105) pour exécuter le premier processus (45), et la deuxième colonne d'enrichissement (103) est raccordée à une deuxième colonne à phase inversée (107) pour exécuter le deuxième processus (47).

8. Montage suivant l'une quelconque des revendications précédentes, comprenant au moins une des particularités suivantes :
au moins un élément analytique est raccordé à un autre élément analytique par la vanne de commutation à plusieurs voies (33 ; 89 ; 91 ; 97 ; 99 ; 151 ; 161 ; 163 ; 205 ; 207) ;
la puce microfluidique (1 ; 87 ; 93 ; 149 ; 159 ; 201) est raccordée simultanément à un premier dispositif d'alimentation d'échantillon (13) et à un deuxième dispositif d'alimentation d'échantillon (15) ;
la puce microfluidique (1 ; 87 ; 93 ; 149 ; 159 ; 201) est raccordée à un premier dispositif d'alimentation microfluidique et un deuxième dispositif d'alimentation microfluidique (67, 69) et à un dispositif d'alimentation d'échantillon (13).

9. Montage suivant l'une quelconque des revendications précédentes, dans lequel la puce microfluidique (1 ; 87 ; 93 ; 149 ; 159 ; 201) comprend une colonne à phase inversée (147), une première colonne d'enrichissement (101) et une deuxième colonne d'enrichissement (103), et est raccordée à un dispositif d'alimentation microfluidique (67) et à un dispositif d'alimentation d'échantillon (13).

10. Montage suivant la revendication précédente, dans lequel le dispositif d'alimentation microfluidique (67) est raccordé à la première colonne d'enrichissement (101) raccordée à la colonne à phase inversée (147) par les vannes de commutation à plusieurs voies (151 ; 161 ; 163), tandis que le dispositif d'alimentation d'échantillon (13) est raccordé à la deuxième colonne d'enrichissement (103) raccordée à l'orifice de vidange (135) de la puce microfluidique (149 ; 159) par les vannes de commutation à plusieurs voies (151 ; 161 ; 163) et inversement.

11. Procédé permettant de faire fonctionner le montage suivant l'une quelconque des revendications précédentes, comprenant les étapes suivantes :
- l'exécution d'un premier processus (45) avec l'un des éléments analytiques, et
- l'exécution d'au moins un processus supplémentaire (47) en parallèle et de manière décalée dans le temps par rapport au premier processus (45) avec l'autre des éléments analytiques.

12. Programme ou produit logiciel, de préférence stocké sur un support de données, pour exécuter ou commander le procédé précédent, lorsqu'il est exécuté sur un système de traitement de données tel qu'un ordinateur.
